# EUROPÄISCHE PATENTSCHRIFT

(11) **EP 0 927 233 B1**
(45) Veröffentlichungstag und Bekanntmachung des Hinweises auf die Patenterteilung: **19.05.2004**
(21) Anmeldenummer: 97941964.5
(22) Anmeldetag: 25.08.1997
(51) Int. Cl.: C09D 167/00

(54) **BESCHICHTUNGSMITTEL, VERFAHREN ZU SEINER HERSTELLUNG SOWIE DIE VERWENDUNG DES BESCHICHTUNGSMITTELS, INSBESONDERE ZUR AUSSENLACKIERUNG VON EMBALLAGEN**
COATING AGENT, PROCESS FOR PRODUCING THE SAME AND ITS USE, IN PARTICULAR FOR LACQUERING THE OUTSIDE OF PACKAGES
AGENT DE REVETEMENT, SON PROCEDE DE PREPARATION ET SON UTILISATION, NOTAMMENT POUR LE LAQUAGE EXTERIEUR D'EMBALLAGES

(30) Priorität: 18.09.1996 DE 19637970
(43) Veröffentlichungstag der Anmeldung: 07.07.1999
(73) Patentinhaber: PPG Industries Ohio, Inc., Cleveland, OH 44111 (US)
(72) Erfinder: KÖSTER, Bernhard, D-48565 Steinfurt (DE); KEWELOH, Ludger, D-48324 Sendenhorst (DE); KIPP, Jörg, D-48291 Telgte (DE); VOGDANIS, Lazaros, D-48165 Münster (DE); CHMIELEWSKI, Dietmar, D-40225 Düsseldorf (DE)
(74) Vertreter: Sternagel, Fleischer, Godemeyer & Partner Patentanwälte
(86) Internationale Anmeldenummer: PCT/EP1997/004623
(87) Internationale Veröffentlichungsnummer: WO 1998/012272

(56) Entgegenhaltungen:
- EP-A- 0 523 940
- EP-A- 0 669 382
- DE-A- 3 111 023
- US-A- 4 740 566

## Beschreibung

Gegenstand der vorliegenden Erfindung ist ein Beschichtungsmittel, enthaltend einen oder mehrere hydroxylgruppenhaltige, gegebenenfalls modifizierte Polyester sowie einen oder mehrere, gegenüber Hydroxylgruppen reaktive Vernetzer.

Die Erfindung betrifft außerdem Verfahren zur Herstellung dieser Beschichtungsmittel und ihre Verwendung zur Beschichtung von Metallsubstraten, insbesondere zur Außenlackierung von Emballagen.

Verpackungsbehälter, wie beispielsweise Dosen, Tuben, Kanister, Eimer u.dgl., die oft auch als Emballagen bezeichnet werden, weisen im allgemeinen auf ihren Außenseiten eine Lackierung auf, die in erster Linie der dekorativen Gestaltung und des Korrosionsschutzes der Emballagen dient. Aus diesem Grunde sind die problemlose Verarbeitung und das Ausbilden einwandfreier Oberflächen als Grundanforderung an geeignete Beschichtungsmittel zu nennen. Die einwandfreie Dekoration muß jedoch den zum Teil extremen Beanspruchungen bei der Herstellung und dem Gebrauch der Emballagen (Falzen, Bördeln, Verformungen, Sterilisation, Pasteurisation usw.) standhalten.

Die Außenlackierung von Emballagen besteht in der Regel aus einem mehrschichtigen Aufbau aus einem Grundlack als Dekorationsträger, einer Druckfarbenbeschichtung und ggf. einem farblosen Schutzlack, dem sog. "Silberlack". Besonders hohe Anforderungen werden an Grundlacke gestellt, die nicht mit einer farblosen Schutzlackierung als äußerem Abschluß versehen werden. Diese Grundlacke sind auch unter dem Namen "Non-Varnish-Außenlack" bekannt.

"Non-Varnish-Außenlacke" müssen eine besonders gute Verträglichkeit zur nachfolgenden Bedruckung aufweisen, d.h. sie müssen gut bedruckbar sein, gute Haftvermittlung und einen guten Einschwitzeffekt zeigen. Die resultierenden Beschichtungen müssen hochglänzend sein, d.h. einen Glanzgrad (60° Reflexionswinkel) >80 und einen hohen Weißgrad aufweisen, eine hohe Abriebbeständigkeit sowie eine glatte Oberflächenstruktur besitzen, d.h. z.B. keine Krater o.dgl. zeigen. Ferner müssen sie diese guten Eigenschaften auch nach den Bedingungen der Sterilisation bzw. Pasteurisation aufweisen.

Derartige "Non-Varnish-Außenlacke" sind bekannt (vgl. z.B. Ullmanns Encyklopädie der technischen Chemie, 4. Auflage, 1978, Band 15, Seiten 713-714). Basisrohstoffe für diese Lacke sind modifizierte Alkydharze, Epoxidharze, Epoxidharzester, Polyester- und Polyacrylatharze sowie üblicherweise Amino- oder Phenolformaldehydharze oder Isocyanate als Vernetzerkomponenten.

Mit zunehmender Produktionsgeschwindigkeit der Lackieranlagen für zweiteilige Getränkedosen u.ä. und der hohen Beanspruchung des aufgebrachten Beschichtungsmittels beim sogenannten "Spin-Necking-Verfahren", bei dem die Dosen im oberen Bereich sehr stark verformt werden, treten große Probleme bei den bekannten Dosenaußenlacken auf. So muß auch bei der extrem starken Verformung Während des "Spin-Necking-Verfahrens" gewährleistet sein, daß keine Beschädigung der Lackschicht auftritt. Diese Forderung kann nur durch Beschichtungsmittel erfüllt werden, die zu flexiblen Lackfilmen führen. Andererseits muß aber weiterhin gewährleistet sein, daß die resultierenden Beschichtungen den extremen mechanischen Beanspruchungen bei der Dosenherstellung und auch Füllung der Dosen standhalten. Das bedeutet, daß die resultierenden Lackfilme eine hohe Abriebfestigkeit und entsprechend hohe Härte, insbesondere Ritzhärte, aufweisen müssen. Die Anforderung einer guten Elastizität bei gleichzeitig guter Härte erfüllen zwar isocyanatvernetzte Systeme, jedoch weisen diese Systeme den Nachteil einer deutlichen Vergilbungsneigung im Falle der pigmentierten Weißlacke auf.

Ein weiterer Nachteil der bekannten Beschichtungsmittel besteht darin, daß es sich um konventionelle, d.h. organisch gelöste, Systeme handelt. Aufgrund der vorgegebenen Applikationsviskositäten enthalten diese Beschichtungsmittel zumeist zwischen 30 und 50 Gew.-% organisches Lösungsmittel, was starke Belastungen der Umgebung durch Lösungsmittelemission beim Einbrennen der Überzüge zur Folge hat. Die Bemühungen gehen daher verstärkt zur Bereitstellung wäßriger Systeme.

Aus der US-PS 4,247,439 und den europäischen Patentschriften Nr. 6334 und 6336 sind hydrolysestabile wäßrige Lacke, insbesondere für die Doseninnenlackierung, bekannt, die aus Veresterungsprodukten von Epoxidharzen mit Carboxyl-funktionellen Polyacrylatharzen erhalten werden.

Außerdem offenbart die US-PS 4,212,781 in wäßrigem, basischem Medium dispergierbare Harzmischungen, die erhalten werden durch Copolymerisation von zum Teil carboxylgruppen enthaltenden ethylenisch ungesättigten Monomeren in Gegenwart eines aliphatischen oder aromatischen 1,2-Diepoxidharzes unter Verwendung von mindestens 3 Gew.-%, bezogen auf das Monomerengewicht, Benzoylperoxid oder äquivalenter Initiatoren. Die aus der US-PS 4,212,781 bekannten Harzmischungen können mit Aminoplastharzen vernetzt werden. Sie eignen sich insbesondere zur Spritzlackierung von Getränkedosen.

Aus der DE-OS 34 46 178 sind wasserverdünnbare Zusammensetzungen zur Beschichtung von Metalldosen bekannt, wobei das in der Zusammensetzung vorliegende Polymer aus einem Reaktionsprodukt von Acrylmonomeren, eines hochmolekularen Epoxidharzes, eines Phenolformaldehydharzes und eines radikalischen Initiators besteht.

Die aus dem Stand der Technik bekannten wäßrigen Systeme für die Außenlackierung von zweiteiligen Getränkedosen werden hauptsächlich auf Aluminiumsubstraten eingesetzt. Sie haben den Nachteil, daß sie auf problematischen Untergründen, wie z.B. abgestreckt-tiefgezogenen Getränkedosen aus Weißblech, einen unzureichenden Oberflächenschutz bieten.

Aus den internationalen Patentanmeldungen mit den internationalen Veröffentlichungsnummern WO 86/01287 und WO 91/10712 sind ferner Überzugsmittel für die Doseninnenlackierung bekannt, bei denen das Bindemittel erhältlich ist, indem zunächst ein Epoxidharz mit einem Polyester verestert wird und in Gegenwart dieses Reaktionsproduktes ein Acrylatcopolymerisat hergestellt wird. Nachteilig ist jedoch, daß das Verfahren zur Herstellung der Bindemittel recht aufwendig ist.

Schließlich sind aus der WO 90/10678 konventionelle Beschichtungsmittel für die Dosenaußenlackierung bekannt, die als Bindemittel hydroxylgruppenhaltige, ggf. modifizierte Polyester und/oder hydroxylgruppenhaltige Acrylatcopolymerisate und/oder hydroxylgruppenhaltige Epoxidharze sowie als Vernetzer blockierte Isocyanate und/oder Aminoplastharze enthalten. Nähere Angaben über geeignete Bindemittelmischungen sind in der WO 90/10678 jedoch nicht enthalten. Vielmehr ist es erfindungswesentlich, daß diese in der WO 90/10678 beschriebenen Beschichtungsmittel als Gleitmittel eine Wachspaste enthalten, die mindestens ein Polyolefinwachs, mindestens ein hydroxylgruppenhaltiges Acrylatcopolymerisat, ggf. ein oder mehrere Melaminformaldehydharze und organisches Lösemittel enthält. Verbesserungsbedürftig bei diesen aus der WO 90/10678 bekannten Beschichtungsmitteln ist die Pasteurisationsbeständigkeit der resultierenden Beschichtungen.

Der vorliegenden Erfindung liegt somit die Aufgabe zugrunde, ein Beschichtungsmittel zur Verfügung zu stellen, das für die Beschichtung von Metallsubstraten, insbesondere für die Außenbeschichtung von Emballagen, bevorzugt von tiefgezogenen Getränkedosen, geeignet ist und das sowohl konventionell als auch in Form wäßriger Bindemittel-Dispersionen einsetzbar sein sollte. Die aus diesen Beschichtungsmitteln hergestellten Überzüge sollten bei guter Härte eine hohe Elastizität aufweisen, um den mechanischen Beanspruchungen bei der Dosenherstellung und der Füllung der Dosen standzuhalten. Weiterhin sollten die Überzüge eine glatte Oberflächenstruktur, einen hohen Glanzgrad und eine gute Bedruckbarkeit sowie vor allem eine gute Haftung des Überzugs auf den verschiedenen Dosenmaterialien, wie z.B. Weißblech, Schwarzblech und oberflächenbehandeltem Stahl sowie Aluminium aufweisen. Die in Rede stehenden Beschichtungsmittel sollten außerdem mit den üblichen Anlagen applizierbar sein.

Im Falle der wäßrigen Beschichtungsmittel sollten sie möglichst das Eigenschaftsniveau bekannter konventioneller Außenlacke hinsichtlich Härte, Elastizität, Haftung, Pasteurisations- sowie Lösemittelbeständigkeit erreichen. Weiterhin sollten derartige wäßrige Beschichtungsmittel bevorzugt eine gute Lagerstabilität der Bindemittel-Dispersionen zeigen.

Diese Aufgabe wird erfindungsgemäß durch ein Beschichtungsmittel der eingangs genannten Art gelöst, das dadurch gekennzeichnet sind, daß das Beschichtungsmittel als Bindemittel eine Mischung aus
A1) 35 bis 95 Gew.-% eines oder mehrerer hydroxylgruppenhaltiger Polyester (A1) mit einer OH-Zahl von 15 bis 210 mgKOH/g, einer Säurezahl von 10 bis 120 mgKOH/g und einem zahlenmittleren Molekulargewicht von 500 bis 6.000 g/mol,
A2) 2 bis 50 Gew.-% eines oder mehrerer von (A1) verschiedener wasserverdünnbarer, phosphor modifizierter Epoxidharzester (A2), die einen Phosphorgehalt von 0,5 bis 3 Gew.-% bezogen auf den Festkörper der Komponente A2 aufweisen, und A3) 0 bis 20 Gew.-% eines oder mehrerer wasserverdünnbarer, hydroxylgruppenhaltiger, epoxidharzmodifizierter Alkydharze (A3)
, wobei die Summe der Gewichtsanteile der Komponenten (A1) bis (A3) jeweils 100 Gew.-% beträgt und wobei die Gewichtsanteile jeweils auf den Festkörper der Bindemittel (A1) bis (A3) bezogen sind, sowie einen oder mehrere, gegenüber Hydroxylgruppen reaktive Vernetzer enthält.

Gegenstand der vorliegenden Erfindung sind außerdem verfahren zur Herstellung der Beschichtungsmittel sowie die Verwendung der Beschichtungsmittel zur Beschichtung von Metallsubstraten, insbesondere von Emballagen, und besonders bevorzugt deren Verwendung zur Außenbeschichtung von tiefgezogenen Dosen.

Es ist überraschend und war nicht vorhersehbar, daß durch die erfindungsgemäße Verwendung der Bindemittelmischung aus (A1), (A2) und ggf. (A3) Beschichtungsmittel mit einer guten Pasteurisationsbeständigkeit und einer guten Härte bei gleichzeitig guter Flexibilität erhalten werden. Ferner ist es vorteilhaft, daß die resultierenden Beschichtungen einen hohen Glanzgrad, einen sehr hohen Weißgrad (Deckvermögen), eine gute Oberflächenstruktur, eine gute Haftung des Überzugs auf verschiedenen Dosenmaterialien sowie eine gute Bedruckbarkeit aufweisen. Außerdem weisen die erfindungsgemäßen Beschichtungsmittel einen hohen Festkörpergehalt auf.

Schließlich weisen die erfindungsgemäßen Beschichtungsmittel den Vorteil auf, daß sie sowohl als konventionelle als auch als wäßrige Beschichtungsmittel einsetzbar sind und daß derartige wäßrige Beschichtungsmittel im wesentlichen das Eigenschaftsniveau bekannter konventioneller Außenlacke hinsichtlich Verlauf, Benetzung, Härte, Elastizität, Haftung, Pasteurisationssowie Lösemittelbeständigkeit erreichen.

Im folgenden werden nun zunächst die einzelnen Bestandteile der erfindungsgemäßen Beschichtungsmittel näher erläutert.

Als Komponente (A1) werden Polyester mit einem zahlenmittleren Molekulargewicht von 500 bis 6.000 g/mol, bevorzugt 700 bis 3.000 g/mol, besonders bevorzugt 700 bis 2.000 g/mol, einer OH-Zahl von 15 bis 210 mg KOH/g, bevorzugt 20 bis 160 mg KOH/g, besonders bevorzugt 30 bis 140 mg KOH/g, und mit einer Säurezahl von 10 bis 120 mg KOH/g, bevorzugt 20 bis 90 mg KOH/g, besonders bevorzugt 30 bis 70 mg KOH/g, eingesetzt. Werden dabei als Komponente (A1) Polyester mit einer niedrigen OH-Zahl eingesetzt, ist bevorzugt die Säurezahl entsprechend hoch.

Die Herstellung der als Komponente (A1) eingesetzten Polyester erfolgt nach den dem Fachmann bekannten Bedingungen für Polyveresterungsreaktionen. Es handelt sich hierbei üblicherweise um Polykondensate aus aromatischen und/oder aliphatischen und/oder cycloaliphatischen Dicarbonsäuren und/oder Polycarbonsäuren, ggf. in Kombination mit Monocarbonsäuren, sowie aliphatischen und/oder cycloaliphatischen und/oder aromatischen Mono-, Di- und/oder Polyolen.

Insbesondere werden als Säurekomponente zur Herstellung der Polyester (A1) aromatische und/oder aliphatische und/oder cycloaliphatische Dicarbonsäuren zusammen mit aromatischen Dicarbonsäureanhydriden und/oder aromatischen Tricarbonsäureanhydriden und/oder aromatischen Tetracarbonsäureanhydriden und -dianhydriden eingesetzt.

Der Anteil an tri- und ggf. höherfunktionellen Aufbaukomponenten (Säure- und Alkoholkomponente) zur Herstellung der Polyester (A1) wird dabei so gewählt, daß die Polyester (A1) die gewünschten Molekulargewichte, OH-Zahlen und Säurezahlen aufweisen.

Bevorzugte carboxylgruppenhaltige Ausgangsverbindungen für die Herstellung der Polyester (Komponente (A1)) sind Terephthalsäure, Isophthalsäure, Dimethylterephthalat, o-Phthalsäure, o-Phthalsäureanhydrid, Trimellithsäure, Tetrahydrophthalsäure, Hexahydrophthalsäure, Trimellithsäureanhydrid, 1,6-Naphthalindicarbonsäure, Adipinsäure, Sebazinsäure, Acelainsäure, Maleinsäure, Fumarsäure, Glutarsäure und längerkettige, aliphatische oder cycloaliphatische Dicarbonsäuren, wie beispielsweise 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Ferner können auch die unter dem Begriff "Dimerfettsäuren" bekannten Carbonsäuren eingesetzt werden. Handelsübliche Dimerfettsäuren enthalten i.a. mindestens 80 Gew.-% Dimerfettsäure und bis maximal 20 Gew.-% Trimere und bis zu maximal 1 Gew.-% Monomere der entsprechenden Fettsäuren. Die cycloaliphtatischen Polycarbonsäuren können sowohl in ihrer cis- als auch in ihrer trans-Form sowie als Gemisch beider Formen eingesetzt werden.

Geeignet sind auch die veresterungsfähigen Derivate der obengenannten Polycarbonsäuren, wie z.B. deren einoder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren oder Dodecenylbernsteinsäureanhydrid o.ä. Anhydride eingesetzt werden, sofern sie existieren. Bevorzugt eingesetzt wird als Säurekomponente zumindest anteilig Trimellithsäureanhydrid.

Beispiele für Monocarbonsäuren, die gegebenenfalls zusammen mit den Polycarbonsäuren eingesetzt werden können, sind Benzoesäure, tert.-Butylbenzoesäure, Laurinsäure, Isononansäure und hydrierte Fettsäuren natürlich vorkommender Öle, bevorzugt Isononansäure.

Bevorzugte Carboxylgruppenhaltige Ausgangsverbindungen für die Herstellung der Polyester (Komponente (A1)) sind Di- und Triole, ggf. in Kombination mit Monolen und/oder höherwertigen Polyolen, wie beispielsweise Ethylenglykol, Propylenglykol-1,2 und -1,3, Butandiole, Petandiole, 2,2-Dimethyl-1,3-propandiol, 2-Ethyl-2-butylpropandiol-1,3, Diethylenglykol, Dipropylenglykol, Hexandiole, 2-Methylpentandiol, 2-Ethylbutandiol-1,4, Dimethylolcyclohexan, Glycerin, Trimethylolethan, Trimethylolpropan, Trimethylolbutan, Pentaerythrit, Dipentaerythrit, Polycaprolactondiole und -triole sowie die unter dem Namen Dianole der Firma Akzo im Handel erhältlichen Produkte u.a. Bevorzugt eingesetzt werden Hexandiol-1,6, Neopentylglykol und Trimethylolpropan.

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität usw.

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure.

Die Herstellung der Polyester (A1) erfolgt nach den bekannten Methoden der Veresterung, wie dies beispielsweise in der DE-A-40 24 204, Seite 4, Zeilen 50 bis 65, beschrieben ist.

Die Umsetzung erfolgt dabei üblicherweise bei Temperaturen zwischen 180 und 280 Grad C, gegebenenfalls in Gegenwart eines geeigneten Veresterungskatalysators, wie z.B. Lithiumoctoat, Dibutylzinnoxid, Dibutylzinndilaurat, para-Toluolsulfonsäure und ähnlichen.

Die Herstellung der Polyester (A1) kann in Gegenwart geringer Mengen eines geeigneten Lösungsmittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan, eingesetzt. Daneben ist es aber auch möglich, die Polyester lösemittelfrei (Umsetzung in Masse) herzustellen.

Besonders bevorzugt werden als Komponente (A1) Polyester eingesetzt, die nach einem zweistufigen Verfahren hergestellt worden sind, indem zunächst ein hydroxylgruppenhaltiger Polyester mit einer OH-Zahl von 100 bis 400 mgKOH/g, bevorzugt von 150 bis 350 mgKOH/g, einer Säurezahl von weniger als 10 mgKOH/g und einem zahlenmittleren Molekulargewicht Mn von 500 bis 2000 g/mol hergestellt wird, der dann in einer zweiten Stufe mit Carbonsäureanhydriden zu dem gewünschten Polyester (A1) umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride, wie z.B. Hexahydrophthalsäureanhydrid, Trimellithsäureanhydrid, Pyromellithsäureanhydrid, Phthalsäureanhydrid, Maleinsäureanhydrid, Camphersäureanhydrid, Tetrahydrophthalsäureanhydrid, Bernsteinsäureanhydrid und Gemische dieser und/oder anderer Anhydride und insbesondere Anhyride aromatischer Polycarbonsäuren, wie Trimellithsäureanhydrid, geeignet.

Neben dieser Umsetzung mit Carbonsäureanhydriden können die Säuregruppen ferner auch durch Verwendung von Dimethylolpropionsäure u.ä. in den Polyester eingeführt werden.

Die Auswahl der als Komponente (A1) eingesetzten hydroxylgruppenhaltigen Polyester erfolgt insbesondere unter dem Gesichtspunkt der Steuerung der Flexibilität der resultierenden Beschichtungen. Insbesondere wird dies über eine entsprechende Wahl der Molekulargewichte sowie bevorzugt über eine entsprechende Auswahl der Aufbaukomponenten des Polyesters gesteuert.

Bevorzugt werden daher als Komponente (A1) Polyester eingesetzt, die als Aufbaukomponenten Trimellithsäureanhydrid, ggf. zusammen mit anderen Säurekomponenten, und/oder Neopentylglykol, Hexandiol und/oder Trimethylolpropan, ggf. zusammen mit anderen Alkoholkomponenten, enthalten.

Als Komponente (A1) können auch die in der internationalen Patentanmeldung WO 88/01287 auf der Seite 6, Zeile 25, bis Seite 13, Zeile 30 beschriebenen epoxidmodifizierten Polyesteracrylate und die in der internationalen Patentanmeldung WO 91/10712 auf Seite 7, Zeile 4, bis Seite 11, Zeile 37 beschriebenen epoxidmodifizierten Polyesteracrylate eingesetzt werden, sofern sie OH-Zahlen, Säurezahlen und zahlenmittlere Molekulargewichte im obengenannten Bereich aufweisen und sofern die verformbarkeit der resultierenden Beschichtungen den Anforderungen für den jeweiligen Anwendungszweck genügt.

Als Komponente (A1) können auch die verschiedensten handelsüblichen Polyester eingesetzt werden, sofern sie OH-Zahlen, Säurezahlen und zahlenmittlere Molekulargewichte im obengenannten Bereich aufweisen und sofern die Verformbarkeit der resultierenden Beschichtungen den Anforderungen für den jeweiligen Anwendungszweck genügt. Als Beispiele für geeignete Polyester (A1) seien die im Handel unter den Markennamen Uradil 250, 253, 254, 256, 258 und 1742 der Firma DSM und Dynapol 935 der Firma Hüls erhältlichen Polyester genannt.

Als Komponente (A2) werden erfindungsgemäß wasserverdünnbare, modifizierte Epoxidharzester eingesetzt. Unter diesen von der Komponente (A1) verschiedenen, modifizierten Epoxidharzestern werden Polymere verstanden, bei denen Epoxidharze eingebaut sind und die zumindest anteilig mit phosphorhaltigen Modifizierungsmitteln, umgesetzt wurden.

Die erfindungsgemäß eingesetzten Epoxidharzester sind beispielsweise dadurch herstellbar, daß Epoxidharze bei der Herstellung von Polyestern als Teil der Alkoholkomponente eingesetzt werden. Epoxidharze enthalten nämlich neben den endständigen Epoxidgruppen stets Hydroxylgruppen, so daß sie einen Teil der Alkoholkomponente ersetzen können. Daneben ist es aber auch möglich, zunächst einen carboxylgruppenhaltigen Polyester herzustellen und anschließend das Epoxidharz in einer Epoxy/Carboxy-Veresterungsreaktion mit dem Polyester umzusetzen.

Der Epoxidharzanteil variiert in den modifizierten Epoxidharzestern und liegt bevorzugt zwischen 40 und 90 Gew.-%, besonders bevorzugt zwischen 50 und 75 Gew.-%, bezogen auf das Gewicht (Festkörperanteil) des modifizierten Epoxidharzesters (A2). Es werden als Komponente (A2) phosphormodifizierte Epoxidharzester eingesetzt, die einen Phosphorgehalt von 0,5 bis 3 Gew.-%, bevorzugt von 1 bis 2,5 Gew.-% Phosphor, bezogen auf den Festkörper von (A2), aufweisen. Üblicherweise ist dabei der Phosphor als Phosphat in den Epoxidharzester eingebaut, wobei auch in diesem Fall der Phosphorgehalt ausgedückt wird über den obengenannten Gehalt an Phosphor und nicht über den Phosphatgehalt.

Die als Komponente (A2) eingesetzten modifizierten Epoxidharzester weisen üblicherweise ein zahlenmittleres Molekulargewicht von 1000 bis 3000 g/mol, bevorzugt von 1500 bis 2500 g/mol und eine Säurezahl von 30 bis 90 mgKOH/g, bevorzugt von 35 bis 50 mgKOH/g, auf. Üblicherweise liegt die OH-Zahl zwischen 100 und 260 mgKOH/g, bevorzugt zwischen 160 und 200 mgKOH/g.

Ebenfalls bevorzugt enthalten die als Komponente (A2) eingesetzten Epoxidharzester neben einem Phosphorträger als weitere Komponenten mindestens eine der folgenden Komponenten, die auch in Form eines diese Komponenten enthaltenen Polyesters in den Epoxidharzester eingebaut sein können: o-Phthalsäure, Isophthalsäure, Benzoesäure, Trimethylolpropan, Pentaerythrit, Dimerfettsäure und Polypropylenglykol.

Die Herstellung der zur Herstellung der Komponente (A2) eingesetzten Polyester erfolgt - wie bereits für die Herstellung der Polyester (A1) beschrieben - nach dem Fachmann bekannten Bedingungen für Polyveresterungsreaktionen. Es handelt sich hierbei üblicherweise ebenfalls um Polykondensate aus aromatischen und/oder aliphatischen und/oder cycloaliphatischen Dicarbonsäuren und/oder Polycarbonsäuren, ggf. in Kombination mit Monocarbonsäuren, sowie aliphatischen und/oder cycloaliphatischen und/oder aromatischen Mono-, Di- und/oder Polyolen. Wegen Einzelheiten und Beispielen für geeignete Aufbaukomponenten sei daher auf die obengenannte Beschreibung der Komponente (EA1) verwiesen.

Zur Herstellung der Epoxidharzester sind insbesondere Diepoxidverbindungen, gegebenenfalls auch Monoepoxidverbindungen, geeignet. Bevorzugt werden zur Herstellung der Epoxidharzester Epoxidharze auf Basis Bisphenol-A eingesetzt. Ferner ist es bevorzugt, Epoxidharze mit einem Epoxidäquivalentgewicht von maximal 500 einzusetzen.

Als Beispiele für geeignete Epoxidharze seien auch die im Handel unter den Markennamen erhältlichen Produkte Epikote® 827, 828 und 1001 der Firma Shell, Aralditharz® GY 2600, GY 250, GT 6071 und GT 7071 der Firma Ciba Geigy sowie DER® 331, 330 und 661 der Firma Dow genannt.

Durch den Einsatz der Komponente (A2) werden insbesondere die Pasteurisations- und die Haftungseigenschaften der resultierenden Beschichtung verbessert, wobei überraschenderweise durch den Zusatz dieses Bindemittels die übrigen Eigenschaften, wie beispielsweise die Flexibilität, der resultierenden Beschichtungen nicht verschlechtert werden.

Als Komponente (A3) werden erfindungsgemäß von den Komponenten (A1) und (A2) verschiedene, epoxidharzmodifizierte, hydroxylgruppenhaltige Alkydharze eingesetzt. Unter epoxidharzmodifizierten Alkydharzen werden Alkydharze verstanden, bei denen Epoxidharze eingebaut sind. Die Epoxidharze können dabei wiederum - insbesondere bei nur einem geringen Epoxidharzanteil - bereits bei der Herstellung der Alkydharze (A3) als Teil der Alkoholkomponente eingesetzt werden (s.o. Beschreibung der Komponente (A2)). Es ist aber bevorzugt, zunächst ein carboxylgruppenhaltiges Alkydharz herzustellen und anschließend das Epoxidharz in einer Epoxy/-Carboxy-Veresterungsreaktion mit dem Alkydharz umzusetzen.

Der Epoxidharzanteil variiert in den epoxidharzmodifizierten Alkydharzen und liegt bevorzugt zwischen 10 und 40 Gew.-%, besonders bevorzugt zwischen 15 und 20 Gew.-%, bezogen auf das Gewicht des epoxidharzmodifizierten Alkydharzes (A3). Der Ölgehalt der Alkydharze liegt üblicherweise zwischen 15 und 60 Gew.-%, bevorzugt zwischen 20 und 45 Gew.-%, jeweils bezogen auf das Gewicht des Alkydharzes(Fesrkörper) ohne Epoxidharzanteil (d.h. i.a. bezogen auf das Gewicht des Alkydharzes vor der Modifizierung mit dem Epoxidharz).

Die als Komponente (A3) eingesetzten epoxidharzmodifizierten Alkydharze weisen bevorzugt ein zahlenmittleres Molekulargewicht von 1000 bis 3000 g/mol, bevorzugt von 1500 bis 2000 g/mol, und eine Säurezahl von 30 bis 90 mgKOH/g, bevorzugt von 40 bis 70 mgKOH/g, auf. Üblicherweise liegt die OH-Zahl zwischen 60 und 200 mgKOH/g, bevorzugt zwischen 80 und 140 mgKOH/g.

Bezüglich geeigneter Aufbaukomponenten des epoxidmodifizierten Alkydharzes (A3) sei auf die obige Beschreibung der Komponenten (A1) und (A2) verwiesen. Bezüglich geeigneter Fettsäuren ist auszuführen, daß bevorzugt ungesättigte Fettsäuren eingesetzt werden. Anstelle oder zusammen mit diesen ungesättigten Fettsäuren können auch gesättigte Fettsäuren eingesetzt werden.

Als Beispiele für geeignete ungesättigte Fettsäuren seien Palmitoleinsäure, Ölsäure, Linolsäure, Linolensäure, Eläostearinsaure und Ricinolsäure sowie als Beispiele für geeignete gesättigte Fettsäuren Capronsäure, Caprylsäure, Caprinsäure, Laurinsäure, Myristansäure, Palmetinsäure, Stearinsäure, Arachinsäure, Behensäure und Lignocerinsäure genannt.

Selbstverständlich auch Mischungen verschiedener Fettsäuren, beispielsweise auch in Form natürlich vorkommender pflanzlicher und tierischer Öle eingesetzt werden.

Bevorzugt werden als Komponente (A3) epoxidmodifizierte Alkydharze eingesetzt, die als Aufbaukomponenten mindestens eine der folgenden Verbindungen enthalten: o-Phthalsäure, Isophthalsäure, Tetrahydrophthalsäure, Trimellithsäure, Benzoesäure, Trimethylolpropan, Pentaerythrit, Glycerin, Palmitinsäure, Stearinsäure, Ölsäure, Linolsäure, Octadecadiensäure und Ricinolsäure. Bevorzugt werden diese Komponenten mit einem Epoxidharz auf Basis Bisphenol-A kombiniert.

Ganz besonders bevorzugt werden als Komponente (A3) die handelsüblichen, epoxidharzmodifizierten Alkydharze Resydrol AX 247W bzw. Resydrol WE 162 (ältere Produktbezeichnung) der Firma Hoechst eingesetzt.

Schließlich können die erfindungsgemäßen Beschichtungsmittel noch ein oder mehrere, von den Komponenten (A1) bis (A3) verschiedene, carboxylgruppenhaltige Polymere (A4) enthalten, und zwar bevorzugt in einer Menge von 5 bis 50 Gew.-%, besonders bevorzugt 2 bis 20 Gew.-%, bezogen auf den Festkörper der Bindemittel (A1) bis (A4) und bezogen auf das Gewicht der Bindemittelmischung aus (A1) bis (A3).

Als Beispiele für geeignete Bindemittel (A4) seien carboxylgruppenhaltige Acrylatcopolymerisate, carboxylgruppenhaltige acrylmodifizierte Polyester, carboxylgruppenhaltige Polyurethanharze, carboxylgruppenhaltige, acrylmodifizierte Polyurethanharze, Epoxyacrylate u.ä. genannt. Selbstverständlich können auch entsprechende, im Handel erhältliche Produkte eingesetzt werden.

Als Komponente (A4) werden bevorzugt carboxylgruppenhaltige Polymere mit einer Säurezahl von 30 bis 100 mgKOH/g, bevorzugt von 40 bis 90 mgKOH/g, und mit einem zahlenmittleren Molekulargewicht bevorzugt von 2.500 bis 8.000 g/mol eingesetzt.

Es ist erfindungswesentlich, daß in den Beschichtungsmitteln als Bindemittel eine Mischung aus
A1) 35 bis 95 Gew.-%, bevorzugt 50 bis 90 Gew.-%, besonders bevorzugt 65 bis 87 Gew.-%, eines oder mehrerer hydroxylgruppenhaltiger Polyester (A1) mit einer OH-Zahl von 15 bis 210 mgKOH/g, einer Säurezahl von 10 bis 120 mgKOH/g und einem zahlenmittleren Molekulargewicht von 500 bis 6.000 g/mol ,
A2) 2 bis 50 Gew.-%, bevorzugt 4 bis 40 Gew.-%, besonders bevorzugt 6 bis 25 Gew.-%, eines oder mehrerer von A1) verschiedener wasserverdünnbarer, phosphor modifizierter Epoxidharzester (A2), die einen Phosphor gehalt von 0,5 bis 3 Gew.-% bezogen auf den Festkörper der Komponente A2) aufweisen, und
A3) 0 bis 20 Gew.-%, bevorzugt 5 bis 15 Gew.-%, besonders bevorzugt 6 bis 10 Gew.-%, eines oder mehrerer wasserverdünnbarer, hydroxylgruppenhaltiger, epoxidharzmodifizierter Alkydharze (A3)
eingesetzt wird, wobei die Summe der Gewichtsanteile der Komponenten (A1) bis (A3) jeweils 100 Gew.-% beträgt und wobei die Gewichtsanteile jeweils auf den Festkörper der Bindemittel (A1) bis (A3) bezogen sind.

Die Verwendung einer solchen Mischung aus den Komponenten (A1) bis (A3) als Bindemittel in Beschichtungsmitteln hat allgemein den Vorteil, daß witterungsbeständige, flexible und gleichzeitig harte Beschichtungen erhalten werden.

In den erfindungsgemäßen Beschichtungsmitteln wird im Falle der pigmentierten Beschichtungsmittel das Bindemittel aus (A1) bis (A4) üblicherweise in einer Gesamtmenge von 10 bis 40 Gew.-%, bevorzugt 20 bis 30 Gew.-%, jeweils bezogen auf den Festkörper der Bindemittel (A1) bis (A4) und bezogen auf das Gesamtgewicht des Beschichtungsmittel, eingesetzt.

In den erfindungsgemäßen Beschichtungsmitteln wird im Falle der nichtpigmentierten Beschichtungsmittel das Bindemittel aus (A1) bis (A4) üblicherweise in einer Gesamtmenge von 10 bis 75 Gew.-%, bevorzugt 35 bis 60 Gew.-%, jeweils bezogen auf den Festkörper der Bindemittel (A1) bis (A4) und bezogen auf das Gesamtgewicht des Beschichtungsmittel, eingesetzt.

Die erfindungsgemäßen Beschichtungsmittel enthalten ferner ein vernetzungsmittel. In den erfindungsgemäßen Beschichtungsmitteln wird im Falle der pigmentierten Beschichtungsmittel der Vernetzer üblicherweise in einer Menge von 4 bis 15 Gew.-%, bevorzugt 5 bis 10 Gew.-%, jeweils bezogen auf den Festkörper des Vernetzers und bezogen auf das Gesamtgewicht des Beschichtungsmittel, eingesetzt.

In den erfindungsgemäßen Beschichtungsmitteln wird im Falle der nichtpigmentierten Beschichtungsmittel der vernetzer üblicherweise in einer Menge von 8 bis 30 Gew.-%, bevorzugt 10 bis 20 Gew.-%, jeweils bezogen auf den Festkörper des Vernetzers und bezogen auf das Gesamtgewicht des Beschichtungsmittel, eingesetzt.

Gemäß der vorliegenden Erfindung kann als Vernetzer (Komponente (B)) jedes beliebige Phenoplastharz und/oder Aminoplastharz verwendet werden, solange es die für die Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder para-ständig mit dem aromatischen Ring verknüpft.

Bevorzugt werden Phenoplastharze vom Resoltyp eingesetzt, die auf Bisphenol A basieren und mehr als eine Methylolgruppe je Phenylring enthalten.

Typische Aminoplastharze sind Melamin-, Benzoguanaminund Harnstoff-Formaldehydharze. Bevorzugt werden diese in mit niederen Alkoholen, meistens Methanol und/oder Ethanol und/oder Butanol, veretherter Form verwendet. Geeignete Aminoplastharze sind beispielsweise unter dem Warenzeichen Cymel, Luwipal, Maprenal und Beetle auf dem Markt erhältlich. Geeignete Aminoplastharze sind insbesondere Methoxymethylethoxymethylbenzoguanaminharze und/oder Hexamethoxymethylmelaminharze.

Selbstverständlich sind neben den Kondensationsprodukten mit Formaldehyd auch solche mit anderen Aldehyden verwendbar.

Weiterhin als Komponente B geeignet sind Isocyanatvernetzer, die allein oder zusammen (insbesondere bei der Beschichtung von Emballagen wird mit einer solchen Abmischung gearbeitet) mit dem Phenoplast- und/oder Aminoplastharz eingesetzt werden können. Beispiele für derartige Isocyanatvernetzer sind blockierte Isocyanate, bevorzugt vom Typ Hexamethylendiisocyanat oder Toluylendiisocyanat, die beispielsweise unter dem Warenzeichen Desmodur auf dem Markt erhältlich sind.

Für den Fall, daß das beschriebene Bindemittel (A) zur Herstellung eines wäßrigen Überzugsmittels eingesetzt wird, werden als Neutralisationsmittel (Komponente (C)) noch 1 bis 7 Gew.-%, bevorzugt 1 bis 5 Gew.-%, jeweils bezogen auf das Gesamtgewicht der Bindemittellösung der Komponenten (A) bis (D), Ammoniak und/oder Amine eingesetzt. Als Neutralisationsmittel (C) bevorzugt sind Triethylamin und/oder Dimethylethanolamin.

Als Komponente (D) geeignete organische Lösungsmittel sind beispielsweise Monoalkohole mit 3 bis 18 Kohlenstoffatomen, wie z.B. Butanol, iso-Butanol, Propanol und iso-Propanol; Glykolether, wie beispielsweise Butylglykol, Butyldiglykol, Hexylglykol und Propylenglykol.

Bevorzugt werden als Lösungsmittel zumindest teilweise solche Lösungsmittel eingesetzt, die zugleich als Cosolvens für die wäßrige Dispersion geeignet sind, z.B. Butanol, Butylglykol und Butyldiglykol.

Die Lösungsmittel und/oder Wasser werden üblicherweise im Falle der pigmentierten Beschichtungsmittel in Mengen von 10 bis 76 Gew.-%, bevorzugt 25 bis 55 Gew.-%, bezogen auf das Gesamtgewicht des Beschichtungsmittels, eingesetzt.

Die Lösungsmittel und/oder Wasser werden üblicherweise im Falle der nichtpigmentierten Beschichtungsmittel in Mengen von 10 bis 80 Gew.-%, bevorzugt 20 bis 55 Gew.-%, bezogen auf das Gesamtgewicht des Beschichtungsmittels, eingesetzt.

Außer der beschriebenen Bindemittellösung können die Beschichtungsmittel ggf. noch weitere Hilfs- und Zusatzstoffe (Komponente (E)) sowie ggf. Pigmente und/oder Füllstoffe (Komponente (F)) in jeweils üblichen Mengen enthalten.

Üblicherweise enthalten die Beschichtungsmittel noch 0 bis 5,0 Gew.-%, bezogen auf das Gesamtgewicht des Beschichtungsmittels, weitere Hilfs- und Zusatzstoffe (E), wie z.B. Gleitmittel wie Wachse, Weichmacher, Stabilisatoren, Netzmittel, Dispergierhilfsmittel, Katalysatoren, oberflächenaktive Zusatzmittel und rheologiesteuernde Additive, und zwar einzeln oder im Gemisch.

Als Beispiele für rheologiesteuernde Additive werden genannt: vernetzte polymere Mikroteilchen, wie sie beispielsweise in der EP-A-38 127 offenbart sind, anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydridoder Ethylen-Maleinsäureanhydrid-Copolymere und ihre Derivate oder auch hydrophob modifizierte ethoxylierte Urethane oder Polyacrylate. Bevorzugt werden als rheologiesteuernde Additive Polyurethane eingesetzt.

Die erfindungsgemäßen Beschichtungsmittel können sowohl in pigmentierter Form als auch als Klarlack eingesetzt werden. Die Pigmente und/oder Füllstoffe (F) werden bevorzugt in Mengen von 10 bis 45 Gew.-%, besonders bevorzugt 20 bis 35 Gew.-%, bezogen auf das Gesamtgewicht des Beschichtungsmittels, eingesetzt. Beispiele für geeignete Pigmente sind Titandioxid, beispielsweise die unter den Handelsnamen Titan Rutil RN 59, RTC 60, R 900 und RDI-S erhältlichen Produkte. Insbesondere, wenn die erfindungsgemäßen Beschichtungsmittel im Bereich der Automobillackierung eingesetzt werden, können sie auch die in diesem Bereich üblicherweise eingesetzten Pigmente, wie z.B. Effektpigmente und organische Pigmente enthalten. Als Effektpigmente können Metallplättchenpigmente, wie handelsübliche Aluminiumbronzen, gemäß delsübliche Edelstahlbronzen sowie nicht metallische Effektpigmente, wie zum Beispiel Perlglanz- bzw. Interferenzpigmente, eingesetzt werden. Beispiele für geeignete organische farbgebende Pigmente sind Indanthrenblau, Cromophthalrot, Irgazinorange und Heliogengrün.

Als Füllstoffe geeignet sind Bariumsulfat, wie z.B. die Handelsprodukte Blancfix micro, Blancfix F; Siliumdioxid, z.B. das Handelsprodukt Quarzmehl SF 600; Kaliumcarbonat und Talkum.

Die Herstellung der Beschichtungsmittel erfolgt mittels üblicher Verfahren mittels Rühren und/oder Dispergieren. Die Herstellung der Beschichtungsmittel erfolgt bevorzugt dadurch, daß zunächst ggf. die Pigmente und/oder Füllstoffe in das Beschichtungsmittel bzw. die Bindemittelmischung eingearbeitet werden, ggf. weitere Hilfs- und Zusatzstoffe zugefügt werden und ggf. anschließend bevorzugt Wasser in das Beschichtungsmittel eindispergiert wird.

Die erfindungsgemäßen Beschichtungsmittel härten üblicherweise im Objekttemperaturbereich von 100 bis 400 °C während einer Zeit von 2 s bis 10 min aus. Sie können durch Walzen, Rakeln, Streichen, Spritzen, Fluten oder Tauchen mittels üblicher Vorrichtungen aufgebracht werden, wobei der Film anschließend zu einem festhaftenden Überzug ausgehärtet wird. Die Beschichtungsmittel werden im Falle der Dosenaußenlacke bevorzugt mittels Walzenauftrag appliziert, im Falle der Doseninnenlacke werden sie bevorzugt mittels Spritzapplikation aufgetragen. Die erfindungsgemäßen wäßrigen Beschichtungsmittel können auch durch die anodische Elektrotauchlackierung aufgebracht werden. Dabei werden die zu beschichtenden Teile in ein wäßriges Bad auf Basis der erfindungsgemäßen, zuvor beschriebenen Beschichtungsmittel eingetaucht und als Anode geschaltet. Mittels Gleichstrom wird ein Film auf den Dosen abgeschieden, das Substrat wird aus dem Bad entfernt, und der Film wird durch Einbrennen gehärtet. Im Falle der Elektrotauchlackierung wird üblicherweise mit einem deutlich niedrigeren Festkörpergehalt und einem entsprechend deutlich höheren Wassergehalt der Beschichtungsmittel gearbeitet als oben angegeben.

Die Beschichtungsmittel werden bevorzugt als Einschichtlackierung mit einer Trockenfilmschichtdicke von im allgemeinen 5 bis 25 /um aufgebracht.

Die erfindungsgemäßen Beschichtungsmittel eignen sich zur Beschichtung von Metallsubstraten jeglicher Art, wie z.B. Eisen und Eisenlegierungen, Aluminium u.ä.. Sie können aber auch auf andere Untergründe, beispielsweise Kunststoff, Holz, Glas, Papier o.ä. aufgebracht werden. Aufgrund der guten Witterungsbeständigkeit, hoher Härte und gleichzeitig hoher Flexibilität können die erfindungsgemäßen Beschichtungsmittel beispielsweise im Bereich der Automobilserienlackierung bzw. bei wahl entsprechender Vernetzer auch im Bereich der Autoreparaturlackierung eingesetzt werden.

Insbesondere werden die erfindungsgemäßen Beschichtungsmittel aber zur Beschichtung von Emballagen eingesetzt. Die erfindungsgemäßen Beschichtungsmittel werden dabei bevorzugt zur Außenbeschichtung von Emballagen, insbesondere Dosen u.dgl. eingesetzt. Sie können aber auch zur Innenbeschichtung von Dosen u.dgl. eingesetzt werden. Die Emballagen können dabei aus den unterschiedlichsten Materialien bestehen und unterschiedlichste Geometrien aufweisen. Als Materialien kommen insbesondere Schwarzblech, Weißblech und verschiedene Eisenlegierungen in Frage, die ggf. mit einer Passivierungsschicht auf Basis von Nickel-, Chrom- und Zinkverbindungen versehen sind. Daneben kommt aber auch Aluminium in Betracht. Die Emballagen können in Form von beispielsweise Dosenhalbteilen, also Rümpfen und Deckeln, als 3-teilige Dosen und als 2-teilige, abgestreckttiefgezogene oder anderweitig tiefgezogene Dosen, wie z.B. Getränke- und Konservendosen, beschichtet werden.

Die aus den erfindungsgemäßen Beschichtungsmitteln erhaltenen Überzüge zeichnen sich durch eine gute Härte bei gleichzeitig guter Flexibilität aus, und die Überzüge zeigen eine gute Pasteurisations- und Sterilisationsbeständigkeit, eine glatte Oberflächenstruktur (Porenfreiheit), einen hohen Glanzgrad, eine gute Bedruckbarkeit sowie vor allem eine gute Haftung auf den verschiedenen Dosenmaterialien, insbesondere auch auf oberflächenbehandelten Stahluntergründen. Die erfindungsgemäßen wäßrigen Beschichtungsmittel erreichen zumindest das Eigenschaftsniveau bekannter konventioneller Außenlacke hinsichtlich Härte, Elastizität, Haftung, Pasteurisations- sowie Lösemittelbeständigkeit.

Nachfolgend wird die Erfindung anhand von Ausführungsbeispielen näher erläutert. Alle Angaben über Teile und Prozente stellen dabei Gewichtsangaben dar, sofern nicht ausdrücklich etwas anderes angegeben wird.

### 1.1. Herstellung des wasserverdünnbaren Polyesterharzes A1-1

In einem 4-l Edelstahlreaktor, der mit Rührer, Kolonne, Thermometer und Wasserabscheider ausgestattet ist, werden 34,584 Teile Neopentylglykol eingewogen und aufgeschmolzen. Dann werden 23,100 Teile Isophthalsäure, 5,874 Teile Terephthalsäure, 5,371 Teile Adipinsäure und 0,033 Teile Dibutylzinnoxid als Veresterungskatalysator zugegeben. Es wird langsam auf 220 °C aufgeheizt und bei 220°C auf eine Säurezahl von 2,0 bis 4,0 mg KOH/g und eine OH-Zahl von 220 - 225 mgKOH/g kondensiert. Hierbei ist darauf zu achten, daß die Kolonnenkopftemperatur 100 °C nicht übersteigt. Nach Erreichen der Säurezahl von 2 bis 4 mgKOH/g wird auf 150 °C abgekühlt und anschließend werden 9,927 Teile Trimellithsäureanhydrid zugegeben. Dann wird auf 170 °C aufgeheizt und die Temperatur.solange gehalten, bis eine Säurezahl von 46 bis 50 mgKOH/g und eine Viskosität von 2,1 bis 2,5 dPa.s (ICI Platte/Kegel-Viskosimeter, 23 °C, 50%ig in Butylglykol) erreicht ist. Dann wird auf 130 °C abgekühlt und mit 16,935 Teilen Butylglykol angelöst. Anschließend wird weiter abgekühlt und bei unter 100 °C werden über einen Zeitraum von ca. 15 min unter Rühren 4,176 Teile Dimethylethanolamin zugegeben. Dann wird abgekühlt und filtriert. Die so erhaltene Lösung des Polyesters A1-1 weist einen Festkörpergehalt von 77 - 79 % (60 min, 130°C, 3 ml Xylol) auf. Das erhaltene Polyesterharz A1-1 weist eine OH-Zahl von 106 mgKOH/g, eine Säurezahl von 43 - 47 mgKOH/g, ein zahlenmittleres Molekulargewicht von 1580 g/mol (gemessen mit GPC gegen Polystyrolstandard) und eine Viskosität von 5,4 - 6,4 dPa.s (ICI Platte/Kegel-Viskosimeter, 23 °C, 55%ig in Butylglykol) auf.

### 1.2. Herstellung des organisch gelösten Polyesterharzes A1-2

In einem 4-l Edelstahlreaktor, der mit Rührer, Kolonne, Thermometer und Wasserabscheider ausgestattet ist, werden 33,783 Teile Neopentylglykol eingewogen und aufgeschmolzen. Dann werden 22,565 Teile Isophthalsäure, 5,738 Teile Terephthalsäure, 5,247 Teile Adipinsäure und 0,032 Teile Dibutylzinnoxid als Veresterungskatalysator zugegeben. Es wird langsam auf 220 °C aufgeheizt und bei 220°C auf eine Säurezahl von 2,0 bis 4,0 mg KOH/g und eine OH-Zahl von 220 - 225 mgKOH/g kondensiert. Hierbei ist darauf zu achten, daß die Kolonnenkopftemperatur 100 °C nicht übersteigt. Nach Erreichen der Säurezahl von 2 bis 4 mgKOH/g wird auf 150 °C abgekühlt und anschließend werden 9,697 Teile Trimellithsäureanhydrid zugegeben. Dann wird auf 170 °C aufgeheizt und die Temperatur solange gehalten, bis eine Säurezahl von 46 bis 50 mgKOH/g und eine Viskosität von 2,1 bis 2,5 dPa.s (ICI Platte/Kegel-Viskosimeter, 23 °C, 50%ig in Butylglykol) erreicht ist. Dann wird auf 130 °C abgekühlt und mit 22,938 Teilen Butylglykol angelöst. Dann wird abgekühlt und filtriert. Die so erhaltene Lösung des Polyesters A1-2 weist einen Festkörpergehalt von 74 - 76 % (60 min, 130°C, 3 ml Xylol) auf. Das erhaltene Polyesterharz A1-2 weist eine OH-Zahl von 106 mgKOH/g, eine Säurezahl von 43 - 47 mgKOH/g, ein zahlenmittleres Molekulargewicht von 1580 g/mol (gemessen mit GPC gegen Polystyrolstandard) und eine Viskosität von 2,0 - 2,6 dPa.s (ICI Platte/Kegel-Viskosimeter, 23 °C, 50%ig in Butylglykol) auf.

### Beispiel 1: Herstellung und Applikation eines wäßrigen Beschichtungsmittels 1

Zur Herstellung des wäßrigen Beschichtungsmittels 1 werden 30,0 Teile des Polyesters A1-1, 0,4 Teile Dimethylethanolamin, 7,0 Teile Butyldiglykol, 3,0 Teile eines handelsüblichen epoxidharzmodifizierten Alkydharzes A3 (70%ig in Butylglykol-/Methoxypropanol mit einem Gehalt der Harzlösung von ca. 22,5 % Butylglykol und ca. 7,5 % Methoxypropanol, OH-Zahl 100 mgKOH/g, Säurezahl 40 - 60 mgKOH/g, Viskosität mit Methoxypropanol auf 50 % verdünnt bei 23 °C von 300 - 600 mPa.s; Handelsprodukt Resydrol^{R} AX 247 der Firma Hoechst AG) vorgelegt und mittels eines Dissolvers 28,0 Teile Titandioxid vom Rutil-Typ eindispergiert. Anschließend werden 0,3 Teile eines handelsüblichen, 100%igen Polytetrafluorethylenwachses mit einem Schmelzpunkt > 150 °C (Handelsprodukt SST 3 der Firma Shamrock, USA), 5,0 Teile eines handelsüblichen, flüssig-viskosen Methoxymethylethoxymethylbenzoguanaminharzes (>98%ig; Handelsprodukt Cymel 1123 der Dyno Cytec), 1,5 Teile eines handelsüblichen, flüssig-viskosen Hexamethoxymethylmelaminharzes (>98 %ig: Handelsprodukt Cymel 303 der Dyno Cytec), 2,5 Teile eines handelsüblichen modifizierten Epoxidharzester A2 (modifizierter Epoxidharzester, 75 %ig in Ethoxypropanol, wobei die Anlösung auch 6% Butylglykol enthält, neutralisiert mit 6,5% N,N-Dimethylethanolamin, als Salz gebunden, Säurezahl 40 mg KOH/g, OH-Zahl 180 mgKOH/g, Viskosität mit Methoxypropanol auf 50 % verdünnt bei 23 °C von 300 -700 mPa.s; Handelsprodukt Resydrol^{R} VWE 5171 der Firma Hoechst AG), 1,1 Teile einer Acrylatdispersion A4 (Festkörpergehalt 34 %, Gehalt an Wasser von 42,03 %, an Butyldiglykol von 11,15 %, an Butylglykol von 9,16 % und an Dimethylethanolamin von 3,66 %, einer Säurezahl des Acrylatharzes von 61 - 65 mgKOH/g und einem zahlenmittleren Molekulargewicht von 6.000 und einer Brookfield-Viskosität bei 25 °C von 900 - 1500 mPa.s) und 0,9 Teile einer handelsüblichen, wäßrigen Carnaubawachsdispersion (Schmelzpunkt 80°C, Festkörpergehalt 28,5 - 31 %, Handelsprodukt LUBA-print CA 30 der Firma L.P. Bader & Co. GmbH) unter Rühren zugegeben. Anschließend werden in die Mischung 20,3 Teile vollentsalztes Wasser eindispergiert. Die Zusammensetzung der in dem Beschichtungsmittel 1 eingesetzten Bindemittelmischung ist in Tabelle 1 zusammengefaßt.

Eine unlackierte, zweiteilige Getränkedose aus Weißblech (E 2.0/2.0) wird mittels Walzenauftrag mit dem Beschichtungsmittel 1 beschichtet. Die Beschichtung wird zweimal 20 s bei 190°C sowie einmal 5 min bei 230 °C eingebrannt. Es resultiert ein Überzug mit einer Trockenfilmschichtdicke von 11 µm. Die Prüfergebnisse der resultierenden Beschichtung sind in Tabelle 2 dargestellt.

### Beispiel 2: Herstellung und Applikation eines konventionellen Beschichtungsmittels 2

Zur Herstellung des konventionellen Beschichtungsmittels 2 werden 30,0 Teile des Polyesters A1-2, 7,0 Teile Butyldiglykol, 3,0 Teile eines handelsüblichen epoxidharzmodifizierten Alkydharzes A3 (70%ig in Butylglykol/Methoxypropanol mit einem Gehalt der Harzlösung von ca. 22,5 % Butylglykol und ca. 7,5 % Methoxypropanol, OH-Zahl 100 mgKOH/g, Säurezahl 40 - 60 mg KOH/g, Viskosität mit Methoxypropanol auf 50 % verdünnt bei 23 °C von 300 - 600 mPa.s; Handelsprodukt Resydrol^{R} AX 247 der Firma Hoechst AG) vorgelegt und 28,0 Teile Titandioxid vom Rutil-Typ mittels eines Dissolvers eindispergiert. Anschließend werden 0,3 Teile eines handelsüblichen, 100%igen Polytetrafluorethylenwachses mit einem Schmelzpunkt > 150 °C (Handelsprodukt SST 3 der Firma Shamrock, USA), 5,0 Teile eines handelsüblichen, flüssig-viskosen Methoxymethylethoxymethylbenzoguanaminharzes (>98%ig; Handelsprodukt Cymel 1123 der Dyno Cytec), 1,5 Teile eines handelsüblichen, flüssig-viskosen Hexamethoxymethylmelaminharzes (>98%ig; Handelsprodukt Cymel 303 der Dyno Cytec), 2,5 Teile eines handelsüblichen modifizierten Epoxidharzesters A2 (modifizierter Epoxidharzester, 75%ig in Ethoxypropanol, wobei die Anlösung auch 6% Butylglykol enthält, neutralisiert mit 6,5% N,N-Dimethylethanolamin, als Salz gebunden, OH-Zahl 180 mgKOH/g, Säurezahl 40 mg KOH/g, Viskosität mit Methoxypropanol auf 50 % verdünnt bei 23 °C von 300 - 700 mPa.s; Handelsprodukt Resydrol^{R} VWE 5171 der Firma Hoechst AG), 1,1 Teile einer Acrylatdispersion A4 (Festkörpergehalt 34 %, Gehalt an Wasser von 42,03 %, an Butyldiglykol von 11,15 %, an Butylglykol von 9,16 % und an Dimethylethanolamin von 3,66 %, einer Säurezahl des Acrylatharzes von 61 - 65 mgKOH/g und einem zahlenmittleren Molekulargewicht von 6.000 und einer Brookfield-Viskosität bei 25 °C von 900 - 1500 mPa.s) und 0,9 Teile einer handelsüblichen, wäßrigen Carnaubawachsdispersion (Schmelzpunkt 80°C, Festkörpergehalt 28,5 - 31 %, Handelsprodukt LUBA-print CA 30 der Firma L.P. Bader & Co. GmbH) unter Rühren eingearbeitet. Anschließend wird die Mischung mit 20,7 Teilen Butyldiglykol versetzt. Die Zusammensetzung der in dem Beschichtungsmittel 2 eingesetzten Bindemittelmischung ist in Tabelle 1 zusammengefaßt.

Die Applikation und Härtung des Beschichtungsmittels 2 sowie die Prüfung der resultierenden Beschichtung erfolgt analog Beispiel 1. Die Prüfergebnisse der resultierenden Beschichtung sind in Tabelle 2 dargestellt.

### Beispiel 3: Herstellung und Applikation eines wäßrigen Beschichtungsmittels 3

Es wird analog Beispiel 1 ein wäßriges Beschichtungsmittel 3 hergestellt mit dem einzigen Unterschied, daß die 3,0 Teile des epoxidmodifizierten Alkydharzes A3 ersatzlos weggelassen wurden. Die Zusammensetzung der in dem Beschichtungsmittel 3 eingesetzten Bindemittelmischung ist in Tabelle 1 zusammengefaßt.

Die Applikation und Härtung des Beschichtungsmittels 3 sowie die Prüfung der resultierenden Beschichtung erfolgt analog Beispiel 1. Die Prüfergebnisse der resultierenden Beschichtung sind in Tabelle 2 dargestellt.

### Beispiel 4: Herstellung und Applikation eines konventionellen Beschichtungsmittels 4

Es wird analog Beispiel 2 ein konventionelles Beschichtungsmittel 4 hergestellt mit dem einzigen Unterschied, daß die 3,0 Teile des epoxidmodifizierten Alkydharzes A3 ersatzlos weggelassen wurden. Die Zusammensetzung der in dem Beschichtungsmittel 4 eingesetzten Bindemittelmischung ist in Tabelle 1 zusammengefaßt.

Die Applikation und Härtung des Beschichtungsmittels 4 sowie die Prüfung der resultierenden Beschichtung erfolgt analog Beispiel 1. Die Prüfergebnisse der resultierenden Beschichtung sind in Tabelle 2 dargestellt.

### Vergleichsbeispiel 1

Es wird analog Beispiel 1 ein wäßriges Beschichtungsmittel V1 hergestellt mit dem einzigen Unterschied, daß die 2,5 Teile des modifizierten Epoxidharzesters A2 und die 3,0 Teile des epoxidmodifizierten Alkydharzes A3 durch insgesamt 5,5 Teile des Polyesterharzes A1-1 ersetzt wurden. Die Zusammensetzung der in dem Beschichtungsmittel V1 eingesetzten Bindemittelmischung ist in Tabelle 1 zusammengefaßt.

Die Applikation und Härtung des Beschichtungsmittels V1 sowie die Prüfung der resultierenden Beschichtung erfolgt analog Beispiel 1. Die Prüfergebnisse der resultierenden Beschichtung sind in Tabelle 2 dargestellt.

### Vergleichsbeispiel 2

Es wird analog Beispiel 1 ein wäßriges Beschichtungsmittel V2 hergestellt mit dem einzigen Unterschied, daß die 30,0 Teile des Polyesterharzes A1-1 und die 3,0 Teile des epoxidmodifizierten Alkydharzes A3 durch insgesamt 33,0 Teile des modifizierten Epoxidharzesters A2 ersetzt wurden. Die Zusammensetzung der in dem Beschichtungsmittel V2 eingesetzten Bindemittelmischung ist in Tabelle 1 zusammengefaßt.

Die Applikation und Härtung des Beschichtungsmittels V2 sowie die Prüfung der resultierenden Beschichtung erfolgt analog Beispiel 1. Die Prüfergebnisse der resultierenden Beschichtung sind in Tabelle 2 dargestellt.

### Vergleichsbeispiel 3

Es wird analog Beispiel 1 ein wäßriges Beschichtungsmittel V3 hergestellt mit dem einzigen Unterschied, daß die 2,5 Teile des modifizierten Epoxidharzesters A2 und die 30,0 Teile des Polyesterharzes A1-1 durch insgesamt 32,5 Teile des epoxidmodifizierten Alkydharzes A3 ersetzt wurden. Die Zusammensetzung der in dem Beschichtungsmittel V3 eingesetzten Bindemittelmischung ist in Tabelle 1 zusammengefaßt.

Die Applikation und Härtung des Beschichtungsmittels V3 sowie die Prüfung der resultierenden Beschichtung erfolgt analog Beispiel 1. Die Prüfergebnisse der resultierenden Beschichtung sind in Tabelle 2 dargestellt.

### Vergleichsbeispiel 4

Es wird analog Beispiel 1 ein wäßriges Beschichtungsmittel V4 hergestellt mit dem einzigen Unterschied, daß die 2,5 Teile des modifizierten Epoxidharzesters A2 durch 2,5 Teile des Polyesterharzes A1-1 ersetzt wurden. Die Zusammensetzung der in dem Beschichtungsmittel V4 eingesetzten Bindemittelmischung ist in Tabelle 1 zusammengefaßt.

Die Applikation und Härtung des Beschichtungsmittels V4 sowie die Prüfung der resultierenden Beschichtung erfolgt analog Beispiel 1. Die Prüfergebnisse der resultierenden Beschichtung sind in Tabelle 2 dargestellt.

**Tabelle 1:**

| Zusammensetzung der in den Beschichtungsmitteln eingesetzten Bindemittelmischungen in Teilen der jeweils eingesetzten Bindemittel-Lösung bzw. -Dispersion und in Klammern in Gew.-%, bezogen auf den Festkörper und bezogen das Gesamtgewicht der Bindemittelmischung aus (A1) + (A2) + (A3) | | | | | | | | |
|---|---|---|---|---|---|---|---|---|
| Bind. | B 1 | B 2 | B 3 | B 4 | V 1 | V 2 | V 3 | V 4 |
| A1-1 | 30 T 85,4% | 0 % | 30 T 92,7% | - 0 % | 35,5T 100 % | - 0 % | - 0 % | 32,5T 92 % |
| A1-2 | - 0 % | 30 T 85,4% | - 0 % | 30 T 92,7% | - 0 % | - 0 % | - 0 % | - 0 % |
| A2 | 2,5 T 6,6 % | 2,5 T 6,6 % | 2,5 T 7,3 % | 2,5 T 7,3 % | - 0 % | 35, 5T 100 % | - 0 % | - 0 % |
| A3 | 3,0 T 8% | 3, 0 T 8% | - 0 % | - 0% | - 0 % | - 0 % | 35,5T 100 % | 3,0 T 8 % |
| A4 | 1,1 T | 1,1 T | 1,1 T | 1,1 T | 1,1 T | 1,1 T | 1,1 T | 1,1 T |

Erläuterungen zu Tabelle 1:
Bindemittel A1-1: im Beispiel 1 beschriebene Acrylatdispersion A1-1
Bindemittel A1-2: im Beispiel 2 beschriebene Acrylatdispersion A1-2
Bindemittel A2: im Beispiel 1 beschriebener, modifizierter Epoxidharzester A2
Bindemittel A3: im Beispiel 1 beschriebener epoxidmodifiziertes Alkydharz A3
Bindemittel A4: im Beispiel 1 beschriebene Acrylatdispersion A4

**Tabelle 2:**

| Prüfergebnisse der resultierenden Beschichtungen | | | | | | | | |
|---|---|---|---|---|---|---|---|---|
| | B1 | B2 | B3 | B4 | V1 | V2 | V3 | V4 |
| 206-Spinneck.¹⁾ | 2 | 2 | 2 | 2 | 2 | 5 | 5 | 2 |
| Bedruckbark.²⁾ | 2 | 2 | 2 | 2 | 2 | 2 | 2 | 2 |
| MEK³⁾ | 1 | 1 | 1 | 1 | 1 | 1 | 1 | 1 |
| Pasteuris.⁴⁾ | 1 | 1 | 1 | 1 | 5 | 1 | 3 | 5 |
| Elastizität⁵⁾ | 2 | 2 | 2 | 2 | 2 | 5 | 5 | 2 |
| Haftung⁶⁾ | 2 | 2 | 2 | 2 | 5 | 1 | 2 | 4 |
| Lagerstabil.⁷⁾ | 1 1 | 1 1 | 4 | 2 | 4 | 2 | 1 | 1 |
| Vergilbung⁸⁾ | 1 | 1 | 1 | 1 | 1 | 1 | 1 | 1 |
| Weißgrad⁹⁾ | 1 | 1 | 1 | 1 | 1 | 1 | 1 | 1 |

| | | | | | | | | |
|---|---|---|---|---|---|---|---|---|
| Erläuterungen zu Tabelle 2: Bei allen Prüfungen ist die Note 1 sehr gut, die Note 3 gerade noch in Ordnung und die Note 5 die schlechteste Note. 1) Die 206-Spinneckbarkeit gibt an, ob die Beschichtung nach der 2. Trocknung durch die mechanische Verformung im Metal-Box-Spin-Necker Diameter 206 geschädigt wird. | | | | | | | | |
| 2) Die Bedruckbarkeit wurde visuell beurteilt. Geprüft wurde, ob die Druckfarbe einen geschlossenen, glänzenden Film ausbilden konnte. | | | | | | | | |
| 3) Beim MEK-Test wird ein mit Methylethylketon getränkter Wattebausch in regelmäßigen Doppelhüben über den Film bewegt, bis der Untergrund sichtbar ist. Die Auflagekraft ist ca. 20 N. Der MEK-Test wird direkt im Anschluß an die Weißlacktrocknung durchgeführt. | | | | | | | | |
| 4) Die Pasteurisationsbeständigkeit wird beurteilt, indem die beschichtete Dose 30 min. bei 85°C mit einer 0,1 %igen Na₂CO₃-Lösung pasteurisiert wird. Geprüft werden anschließend Tesafilmabriss und Wasseraufnahme. | | | | | | | | |
| 5) Die Elastizität wird beurteilt, indem ein Erichsen Näpfchen (1. und 2. Zug) angefertigt wurde. | | | | | | | | |
| 6) Die Haftung wurde beurteilt, indem eine Gitterschnittprüfung mit Tesafilmabriss durchgeführt wurde. | | | | | | | | |
| 7) Die Lagerstabilität wurde beurteilt durch Lagerung der Beschichtungsmittel 6 Monate bei Raumtemperatur und anschließende Beurteilung der Eigenschaften des Beschichtungsmittels. | | | | | | | | |
| 8) Die Vergilbungsbeständigkeit wird beurteilt, indem die fertig eingebrannte Dose mit einer Dose, die nur einer Weißlacktrocknung unterzogen wurde, visuell verglichen wird. | | | | | | | | |
| 9) Der Weißgrad wird beurteilt, indem man das zu prüfende Beschichtungsmittel und ein Standardbeschichtungsmittel jeweils auf eine Tafel bei gleicher Schichtstärke aufrakelt und die resultierende Beschichtung visuell vergleichend beurteilt. | | | | | | | | |

### Zusammenfassung der Prüfergebnisse

Der Vergleich der Beispiele 1, 2, 3 und 4 sowie der Vergleichsbeispiele 1 bis 4 zeigt, daß die Beschichtungsmassen der Beispiele 1 bis 4 hervorragende Beständigkeiten und sehr gute mechanische Eigenschaften, im speziellen eine ausgezeichnete Spinneckbarkeit auf verzinntem Stahlblech bei tiefgezogenen Dosen, besitzen. Ferner ist die Bedruckbarkeit mit den der bekannten Außenlacke vergleichbar. Die Pasteurisationsbeständigkeit sowohl der lösemittelhaltigen als auch der wäßrigen Beschichtungsmittel entspricht den hohen Anforderungen, wie sie bei konventionellen Emballagenlacken auf Lösemittelbasis verlangt werden. Der Vergleich der Beispiele 1 und 3 mit den Vergleichsbeispielen 1 bis 4 zeigt, daß durch den Einsatz von A1-1 und den Zusatz des modifizierten Epoxidharzesters A2 Beschichtungsmittel mit sowohl einer guten Verformbarkeit als auch einer guten Pasteurisationsbeständigkeit erhalten werden, während die Verwendung des Polyesters A1-1 ohne Zusatz von A2 (Vergleichsbeispiel 1) zu einer schlechten Pasteurisationsbeständigkeit sowie einer schlechten Haftung und die Verwendung von A2 ohne Zusatz von A1-1 (Vergleichsbeispiel 2) zu einer schlechten Elastizität und somit einer schlechten Verformbarkeit der Beschichtungen führt. Die alleinige Verwendung des Alkydharzes A3 ohne Zusatz von A1-1 und A2 (Vergleichsbeispiel 3) führt ebenfalls zu einer schlechten Elastizität und somit zu einer schlechten Verformbarkeit der Beschichtungen. Die Kombination der Bindemittel A1-1 und A3 (Vergleichsbeispiel 4) hat demgegenüber den Nachteil, daß sich die Pasteurisationsbeständigkeit verschlechtert.

## Patentansprüche

1. Beschichtungsmittel, das als Bindemittel eine Mischung aus
A1) 35 bis 95 Gew.-% eines oder mehrerer hydroxylgruppenhaltiger Polyester (A1) mit einer OH-Zahl von 15 bis 210 mgKOH/g, einer Säurezahl von 10 bis 120 mgKOH/g und einem zahlenmittleren Molekulargewicht von 500 bis 6000 g/mol,
A2) 2 bis 50 Gew.-% eines oder mehrerer von A1) verschiedener wasserverdünnbarer, phosphormodifizierter Expoxidharzester (A2), die einen Phosphorgehalt von 0,5 bis 3 Gew.-% bezogen auf den Festkörper der Komponente A2) aufweisen, und
A3) 0 bis 20 Gew.-X eines oder mehrerer wasserverdünnbarer, hydroxylgruppenhaltiger, epoxidharzmodifizierter Alkydharze (A3),
wobei die Summe der Gewichtsanteile der Komponenten (A1) bis (A3) jeweils 100 Gew.-% beträgt und wobei die Gewichtsanteile jeweils auf den Festkörper der Bindemittel (A1) bis (A3) bezogen sind, sowie einen oder mehrere, gegenüber Hydroxylgruppen reaktive Vernetzer enthält.

2. Beschichtungsmittel nach Anspruch 1, **dadurch gekennzeichnet, daß** es als Bindemittel
A1) 50 bis 90 Gew.-% des oder der hydroxylgruppenhaltigen Polyester (A1),
A2) 4 bis 40 Gew.-% des oder der wasserverdünnbaren, modifizierten Epoxidharzester (A2) und
A3) 5 bis 15 Gew.-% des oder der wasserverdünnbaren, hydroxylgruppenhaltigen, epoxidharzmodifizierten Alkydharze (A3)
enthält, wobei die Summe der Gewichtsanteile der Komponenten (A1) bis (A3) jeweils 100 Gew.-% beträgt und wobei die Gewichtsanteile jeweils auf den Festkörper der Bindemittel (A1) bis (A3) bezogen sind.

3. Beschichtungsmittel nach Anspruch 1 oder 2, **dadurch gekennzeichnet, daß** es als Komponente (A1) ein oder mehrere hydroxylgruppenhaltige Polyester mit einer OH-Zahl von 20 bis 160 mgKOH/g, einer Säurezahl von 20 bis 90 mgKOH/g und mit einem zahlenmittleren Molekulargewicht von 700 bis 3.000 g/mol enthält.

4. Beschichtungsmittel nach einem der Ansprüche 1 bis 3, **dadurch gekennzeichnet, daß** es als Komponente (A1) ein oder mehrere Polyester enthält, die erhältlich sind unter Verwendung von Trimellithsäureanhydrid und/oder Trimethylolpropan und/oder Neopentylglykol und/oder Hexandiol.

5. Beschichtungsmittel nach einem der Ansprüche 1 bis 4, **dadurch gekennzeichnet, daß** es als Komponente (A2) ein oder mehrere modifizierte, bevorzugt phosphormodifizierte, Epoxidharzester mit einem Epoxidharzanteil zwischen 40 und 90 Gew.-%, bevorzugt zwischen 50 und 75 Gew.-%, und/oder mit einem Phosphorgehalt von 0,5 bis 3 Gew.-%, bevorzugt 1 bis 2,5 Gew.-%, enthält, wobei alle Gew.-%-Angaben jeweils auf das Gewicht des Epoxidharzesters bezogen sind.

6. Beschichtungsmittel nach einem der Ansprüche 1 bis 5, **dadurch gekennzeichnet, daß** es als Komponente (A3) ein oder mehrere epoxidmodifizierte Alkydharze mit einem Epoxidharzanteil zwischen 10 und 40 Gew.-%, bevorzugt 15 bis 20 Gew.-%, bezogen auf das Gesamtgewicht des Alkydharzes und/oder einem Ölgehalt zwischen 15 und 60 Gew.-%, bevorzugt zwischen 20 und 45 Gew.-%, bezogen auf das Gewicht des Alkydharzes ohne Epoxidharzanteil, enthält.

7. Beschichtungsmittel nach einem der Ansprüche 1 bis 6, **dadurch gekennzeichnet, daß** es als weiteres Bindemittel (A4) ein oder mehrere, von den Komponenten (A1) bis (A3) verschiedene, carboxylgruppenhaltige Polymere (A4) enthält.

8. Beschichtungsmittel nach einem der Ansprüche 1 bis 7, **dadurch gekennzeichnet, daß** es als Vernetzer ein oder mehrere Aminoplastharze enthält.

9. Beschichtungsmittel nach einem der Ansprüche 1 bis 8, **dadurch gekennzeichnet, daß** es
A) 10 bis 40 Gew.-% der Bindemittelmischung (A) aus (A1), (A2), ggf. (A3) und ggf. (A4),
B) 4 bis 15 Gew.-% des Vernetzers (B),
C) 0 bis 7 Gew.-% eines oder mehrerer üblicher Neutralisationsmittel,
D) 10 bis 76 Gew.-% eines oder mehrerer organischer Lösemittel und/oder Wasser,
E) 0 bis 5 Gew.-% übliche Hilfs- und Zusatzstoffe und
F) 10 bis 45 Gew.-% Pigmente und/oder Füllstoffe enthält, wobei die Summe aller Gewichtsanteile der Komponenten (A) bis (F) jeweils 100 Gew.-% beträgt.

10. Beschichtungsmittel nach einem der Ansprüche 1 bis 8, **dadurch gekennzeichnet, daß** es
A) 10 bis 75 Gew.-% der Bindemittelmischung (A) aus (A1), (A2), ggf. (A3) und ggf. (A4),
B) 8 bis 30 Gew.-% des Vernetzers (B),
C) 0 bis 7 Gew.-% eines oder mehrerer üblicher Neutralisationsmittel,
D) 10 bis 80 Gew.-% eines oder mehrerer organischer Lösemittel und/oder Wasser und
E) 0 bis 5 Gew.-% übliche Hilfs- und Zusatzstoffe enthält, wobei die Summe aller Gewichtsanteile der Komponenten (A) bis (E) jeweils 100 Gew.-% beträgt.

11. Verfahren zur Herstellung der Beschichtungsmittel nach einem der Ansprüche 1 bis 10, **dadurch gekennzeichnet, daß** zunächst die Pigmente und/oder Füllstoffe in das Beschichtungsmittel eingearbeitet werden, ggf. weitere Hilfs- und Zusatzstoffe zugefügt werden und ggf. anschließend Wasser in das beschichtungsmittel eindispergiert wird.

12. Verwendung der Beschichtungsmittel nach einem der Ansprüche 1 bis 10 zur Beschichtung von Metallsubstraten.

13. Verwendung der Beschichtungsmittel nach einem der Ansprüche 1 bis 10 zur Beschichtung von Emballagen, insbesondere als Non-Varnish-Außenlack für die Beschichtung von tiefgezogenen Dosen.

14. Emballage beschichtet mit einem Beschichtungsmittel nach einem der Ansprüche 1 bis 10.

## Claims

1. Coating composition comprising as a binder a mixture of
A1) from 35 to 95 weight percent of one or more hydroxyl group-containing polyester(s) (A1) having an OH number of from 15 to 210 mgKOH/g, an acid number of from 10 to 120 mgKOH/g, and a number-average molecular weight of from 500 to 6,000 g/mol,
A2) from 2 to 50 weight percent of one or more water-thinnable phosphorus-modified epoxy resin ester(s) (A2) that are different from (A1) and have a phosphorus content of from 0.5 to 3 weight percent, based on the solids of component (A2), and
A3) from 0 to 20 weight percent of one or more water-thinnable hydroxyl group-containing epoxy resin-modified alkyd resin(s) (A3),
whereby the sum of the weight percentages of components (A1) to (A3) in each case equals 100 weight percent and the weight percentages in each case are given in relation to the solids in the binders (A1) to (A3), as well as one or more hydroxyl group-reactive crosslinker(s).

2. Coating composition according to claim 1, **characterized in that** it comprises as a binder
A1) from 50 to 90 weight percent of the hydroxyl group-containing polyester(s) (A1),
A2) from 4 to 40 weight percent of the water-thinnable modified epoxy resin ester(s) (A2), and
A3) from 5 to 15 weight percent of the water-thinnable hydroxyl group-containing epoxy resin-modified alkyd resin(s) (A3),
whereby the sum of the weight percentages of components (A1) to (A3) in each case equals 100 weight percent and the weight percentages in each case are based on the solids in the binders (A1) to (A3).

3. Coating composition according to claim 1 or 2, **characterized in that** it comprises as component (A1) one or more hydroxyl group-containing polyesters having an OH number of from 20 to 160 mgKOH/g, an acid number of from 20 to 90 mgKOH/g, and having a number-average molecular weight of from 700 to 3,000 g/mol.

4. Coating composition according to any one of claims 1 to 3, **characterized in that** it comprises as component (A1) one or more polyesters which are obtainable using trimellitic acid anhydride and/or trimethylol propane and/or neopentyl glycol and/or hexane diol.

5. Coating composition according to any one of claims 1 to 4, **characterized in that** it comprises as component (A2) one or more modified, preferably phosphorus-modified, epoxy resin esters having an epoxy resin content of between 40 and 90 weight percent, preferably between 50 and 75 weight percent, and/or having a phosphorus content of from 0.5 to 3 weight percent, preferably from 1 to 2.5 weight percent, whereby all weight percentages in each case are based on the weight of the epoxy resin ester.

6. Coating composition according to any one of claims 1 to 5, **characterized in that** it comprises as component (A3) one or more epoxide-modified alkyd resins having an epoxy resin content of between 10 and 40 weight percent, preferably 15 to 20 weight percent, based on the overall weight of the alkyd resin, and/or an oil content of between 15 and 60 weight percent, preferably between 20 and 45 weight percent, based on the weight of the alkyd resin without the epoxy resin component.

7. Coating composition according to any one of claims 1 to 6, **characterized in that** it comprises as a further binder (A4) one or more carboxyl group-containing polymers (A4) which are different from components (A1) to (A3).

8. Coating composition according to any one of claims 1 to 7, **characterized in that** it comprises as crosslinker(s) one or more aminoplastic resins.

9. Coating composition according to any one of claims 1 to 8, **characterized in that** it comprises
A) from 10 to 40 weight percent of the binder mixture (A) comprising (A1), (A2), optionally (A3) and optionally (A4),
B) from 4 to 15 weight percent of the crosslinker (B),
C) from 0 to 7 weight percent of one or more customary neutralizing agents,
D) from 10 to 76 weight percent of one or more organic solvents and/or water,
E) from 0 to 5 weight percent of customary auxiliaries and additives, and
F) from 10 to 45 weight percent of pigments and/or fillers, whereby the sum of all weight percentages of components (A) to (F) in each case equals 100 weight percent.

10. Coating composition according to any one of claims 1 to 8, **characterized in that** it comprises
A) from 10 to 75 weight percent of the binder mixture (A) comprising (A1), (A2), optionally (A3) and optionally (A4),
B) from 8 to 30 weight percent of the crosslinker (B),
C) from 0 to 7 weight percent of one or more customary neutralizing agents,
D) from 10 to 80 weight percent of one or more organic solvents and/or water, and
E) from 0 to 5 weight percent of customary auxiliaries and additives,
whereby the sum of all weight percentages of components (A) to (E) in each case equals 100 weight percent.

11. Process for preparing the coating composition according to any one of claims 1 to 10, **characterized in that** first of all the pigments and/or fillers are incorporated into the coating composition, optionally further auxiliaries and additives are added, and then, optionally, water is incorporated into the coating composition by dispersion.

12. Use of the coating composition according to any one of claims 1 to 10 for coating metal substrates.

13. Use of the coating composition according to any one of claims 1 to 10 for coating packaging containers, especially as a non-varnish exterior coating for the coating of deep-drawn cans.

14. A packaging container coated with the coating composition according to any one of claims 1 to 10.

## Revendications

1. Agent de revêtement qui contient en tant qu'agent liant un mélange constitué de
A1) 35 à 95 % en poids d'un ou plusieurs polyesters (A1) contenant des groupes hydroxyle avec un indice OH de 15 à 210 mg de KOH / g, un indice d'acidité de 10 à 120 mg de KOH / g et une moyenne numérique de poids moléculaire de 500 à 6000 g / mol,
A2) 2 à 50 % en poids d'un ou plusieurs esters (A2) de résine époxy diluables à l'eau, modifiés par du phosphore et différents de A1), présentant une teneur en phosphore de 0,5 à 3 % en poids par rapport aux solides du composant A2), et
A3) 0 à 20 % en poids d'une ou plusieurs résines alkydes (A3) diluables à l'eau, contenant des groupes hydroxyle, modifiées par une résine époxy,
la somme des fractions pondérales des composants (A1) à (A3) totalisant à chaque fois 100 % en poids et les fractions pondérales étant respectivement ramenées aux solides des liants (A1) à (A3), ainsi qu'un ou plusieurs agents de réticulation réactifs vis-à-vis des groupes hydroxyle.

2. Agent de revêtement selon la revendication 1 caractérisé en qu'il contient en tant qu'agent liant
A1) 50 à 90 % en poids du ou des polyesters contenant des groupes hydroxyle (A1),
A2) 4 à 40 % en poids de l'ester ou des esters (A2) de résine époxy diluables à l'eau, modifiés, et
A3) 5 à 15 % en poids de la ou des résines alkydes (A3) diluables à l'eau, contenant des groupes hydroxyle, modifiées par une résine époxy,
la somme des fractions pondérales des composants (A1) à (A3) totalisant à chaque fois 100 % en poids et les fractions pondérales étant respectivement ramenées aux solides des liants (A1) à (A3).

3. Agent de revêtement selon la revendication 1 ou 2 **caractérisé en ce qu'**il contient comme composant (A1) un ou plusieurs polyesters contenant des groupes hydroxyle avec un indice OH de 20 à 160 mg de KOH / g, un indice d'acidité de 20 à 90 mg de KOH / g et une moyenne numérique de poids moléculaire de 700 à 3000 g / mol.

4. Agent de revêtement selon une des revendications 1 à 3 **caractérisé en ce qu'**il contient comme composant (A1) un ou plusieurs polyesters qui peuvent être obtenus en utilisant de l'anhydride d'acide trimellitique et/ou du triméthylolpropane et/ou du néopentylglycol et / ou de l'hexanediol.

5. Agent de revêtement selon une des revendications 1 à 4 **caractérisé en ce qu'**il contient comme composant (A2) un ou plusieurs esters de résine époxy modifiés, de préférence modifiés par du phosphore, avec une fraction de résine époxy représentant entre 40 et 90 % en poids, de préférence entre 50 et 75 % en poids, et / ou avec une teneur en phosphore représentant entre 0,5 et 3 % en poids, de préférence entre 1 et 2,5 % en poids, toutes les données de % en poids étant respectivement ramenées au poids de l'ester de résine époxy.

6. Agent de revêtement selon une des revendications 1 à 5 **caractérisé en ce qu'**il contient comme composant (A3) une ou plusieurs résines alkydes modifiées par de l'époxy avec une fraction de résine époxy représentant entre 10 et 40 % en poids, de préférence entre 15 et 20 % en poids, par rapport au poids total de la résine alkyde et / ou une teneur en huile représentant entre 15 et 60 % en poids, de préférence entre 20 et 45 % en poids, par rapport au poids de la résine alkyde sans fraction de résine époxy.

7. Agent de revêtement selon une des revendications 1 à 6 **caractérisé en ce qu'**il contient comme autre liant (A4) un ou plusieurs polymères (A4) différents des composants (A1) à (A3), contenant des groupes carboxyle.

8. Agent de revêtement selon une des revendications 1 à 7 **caractérisé en ce qu'**il contient comme agent de réticulation une ou plusieurs résines aminoplastes.

9. Agent de revêtement selon une des revendications 1 à 8 **caractérisé en ce qu'**il contient
A) 10 à 40 % en poids du mélange de liants (A) constitué de (A1), (A2), le cas échéant de (A3) et le cas échéant de (A4),
B) 4 à 15 % en poids de l'agent de réticulation (B),
C) 0 à 7 % en poids d'un ou plusieurs agents de neutralisation usuels,
D) 10 à 76 % en poids d'un ou plusieurs solvants organiques et / ou d'eau,
E) 0 à 5 % en poids d'adjuvants et d'additifs et
F) 10 à 45 % en poids de pigments et/ou de matières de remplissage,
la somme de toutes les fractions pondérales des composants (A) à (F) totalisant à chaque fois 100 % en poids.

10. Agent de revêtement selon une des revendications 1 à 9 **caractérisé en ce qu'**il contient
A) 10 à 75 % en poids du mélange de liants (A) constitué de (A1), (A2), le cas échéant de (A3) et le cas échéant de (A4),
B) 8 à 30 % en poids de l'agent de réticulation (B),
C) 0 à 7 % en poids d'un ou plusieurs agents de neutralisation usuels,
D) 10 à 80 % en poids d'un ou plusieurs solvants organiques et / ou d'eau et
E) 0 à 5 % en poids d'adjuvants et d'additifs,
la somme de toutes les fractions pondérales des composants (A) à (E) totalisant à chaque fois 100 % en poids.

11. Procédé de préparation de l'agent de revêtement selon une des revendications 1 à 10 **caractérisé en ce que** les pigments et / ou les matières de remplissage sont tout d'abord mélangés à l'agent de revêtement, d'autres adjuvants et additifs sont, le cas échéant, ajoutés et enfin de l'eau est, le cas échéant, dispersée dans l'agent de revêtement.

12. Utilisation de l'agent de revêtement selon une des revendications 1 à 10 pour le revêtement de substrats métalliques.

13. Utilisation de l'agent de revêtement selon une des revendications 1 à 10 pour le revêtement d'emballages, en particulier en tant que laque extérieure n'étant pas du vernis pour le revêtement de boîtes embouties.

14. Emballage revêtu d'un agent de revêtement selon une des revendications 1 à 10.
